# EUROPÄISCHE PATENTSCHRIFT

(11) **EP 0 762 587 B1**
(45) Veröffentlichungstag und Bekanntmachung des Hinweises auf die Patenterteilung: **15.03.2000**
(21) Anmeldenummer: 96113053.1
(22) Anmeldetag: 14.08.1996
(51) Int. Cl.: H02G 3/12

(54) **Abdeckung für elektrische Installationsgeräte**
Cover for electrical installation device
Couvercle pour dispositif d'installation électrique

(30) Priorität: 02.09.1995 DE 29514138 U
(43) Veröffentlichungstag der Anmeldung: 12.03.1997
(73) Patentinhaber: GIRA GIERSIEPEN GmbH. & CO. KG., D-42477 Radevormwald (DE)
(72) Erfinder: Rittinghaus,Olaf, 58540 Meinerzhagen (DE)
(74) Vertreter: Zapf, Christoph, Dipl.-Ing.

(56) Entgegenhaltungen:
- DE-A- 4 444 736
- DE-U- 8 627 314
- US-A- 4 953 733

## Beschreibung

Die vorliegende Erfindung betrifft eine Abdeckung für elektrische Installationsgeräte, insbesondere Unterputzgeräte, bestehend aus einem flachen Deckelteil, wobei das Deckelteil eine Mindestgröße aufweist, die ausreicht, um eine Öffnung des Installationsgerätes schmutzdicht zu verschließen, und auf seiner Vorderseite mindestens einen von der Oberfläche vorstehenden Griffansatz und auf seiner Rückseite mindestens ein Befestigungsmittel zur kraft- und/oder formschlüssigen Verbindung mit dem Installationsgerät aufweist.

Es sind bereits Abdeckungen für Unterputz-Abzweigdosen bekannt. Diese Abdeckungen dienen jedoch lediglich dem Verschluß der Abzweigdosen, die dann problemlos überstrichen bzw. übertapeziert werden können, so daß sie optisch nur schwer erkennbar und damit auch schlecht wiederauffindbar sind.

Dies trifft beispielsweise auf den Gegenstand des deutschen Gebrauchsmusters DE-U-86 27 314 zu, in dem eine der Abdeckung einer Zugangsöffnung einer Unterputzdose dienende Schutz- und Montageplatte beschrieben ist, die rückseitig Rippen (als Befestigungselemente) und vorderseitig eine Handhabe aufweist. Die Handhabe ist gemäß der Zeichnung der DE-U-86 27 314 als stabförmiger Griffansatz ausgebildet. Die Schutz- und Montageplatte soll während des Einsetzens und Verputzens einerseits vor Verschmutzung schützen und andererseits eine Deformierung der Unterputzdose verhindern. Eine solche Schutz- und Montageplatte würde nach einem Übertapezieren nicht wiedergefunden werden können, insbesondere deswegen, weil ihre Ränder bündig mit der Unterputzdose abschließen, d.h eine Ebene mit der Wand bilden.

Weiterhin bilden auch bestimmte Betätigungslemente und deren Rahmenblenden grundsätzlich "Abdeckungen" für das jeweilige Installationsgerät bzw. für dessen Unterputz-Sockel. Diese Abdeckungen, bei denen es sich meist um hochwertige und verhältnismäßig teure Kunststofformteile handelt, sind jedoch zum Übertapezieren ungeeignet, da sie einerseits für den späteren Gebrauch wieder gereinigt werden müßten und andererseits die aufgeklebte Tapete über den Randbereich des Installationsgerätes hinaus großflächig abgehoben würde und somit keine einwandfrei verklebte Tapete im Randbereich des Unterputzgerätes gewährleistet werden könnte.

Die US-A-4 953 733 beschreibt eine in eine Unterputzdose einsetzbare, I-förmige Markierungseinrichtung, die an jeder der vier Ecken eines rechteckig ausgebildeten Zentralkörpers Ansätze aufweist, an denen sich rückseitig Befestigungselemente und vorderseitig pfeilförmige gewinkelte Markierungselemente befinden. Die pfeilförmigen Markierungselemente dienen dazu, die Kontur der Unterputzdose auf einem Wandpaneel zu markieren, damit dieses entsprechend zugeschnitten werden kann. Das Anbringen des Wandelementes erfolgt nach dem Zuschnitt. Die Markierungseinrichtung weist keinen speziellen Griff oder dgl. auf, sondern wird bei der Montage offensichtlich rechts und links am Zentralkörper erfaßt. Die Ebene des Zentralkörpers liegt im montierten Zustand innerhalb der Dose, nur die Markierungselemente stehen daraus hervor. Diese Markierungseinrichtung ist nicht als Abdeckung verwendbar.

Der vorliegenden Erfindung liegt die Aufgabe zugrunde, eine einfache und preiswerte Abdeckung zu schaffen, die verschiedenartige elektrische Unterputzgeräte insbesondere bei Renovierungsarbeiten oder dergleichen wirksam gegen das Eindringen von Fremdsubstanzen schützt und ein einfaches Wiederauffinden der durch Tapeten oder dergleichen verdeckten Unterputzgeräte gewährleistet.

Erfindungsgemäß wird das dadurch erreicht, daß der Griffansatz als Findungsansatz zur Wiederauffindung eines übertapezierten elektrischen Installationsgerätes an seinem freien, dem Deckelteil abgekehrten Ende eine Schneidkante aufweist, wobei das Deckelteil derart im Montagezustand auf dem Unterputzgerät aufliegt und ausgebildet ist, daß seine Ränder Anlagekanten für ein Schneidwerkzeug zum Durchschneiden der Tapete bilden.

Diese Abdeckung dient insbesondere dem Schutz von in Räumen installierten Unterputzgeräten, falls die Wände dieser Räume beispielsweise tapeziert oder gestrichen werden. Bei derartigen Arbeiten können herkömmliche Unterputzgeräte, die nicht mit ihren Rahmenblenden und Betätigungselementen versehen sind, mit einer erfindungsgemäßen Abdeckung verschlossen und so gegen das Eindringen von Farbe, Kleister und dergleichen geschützt werden.Der vorstehende, insbesondere als Griffansatz ausgeführte Findungsansatz dient hier vorzugsweise der Wiederauffindung des übertapezierten Unterputzgerätes, während die anderseitigen Fortsätze zur kraft- und/oder formschlüssigen Verbindung beispielsweise in die Öffnungen eines Rahmenteils des Installationsgerätes eingreifen. Mit Vorteil weist der insbesondere laschenartige Findungsansatz eine Schneidkante auf, wodurch mittels Druck auf die Tapete im Bereich des Findungsansatzes diese aufgetrennt werden kann und der Griff bzw. Findungsansatz frei zugänglich wird. Anschließend kann die in Anpassung an die Unterputzgeräte vorzugsweise quadratische Abdeckung umfänglich umschnitten werden. Hierbei dienen die Ränder des Deckelteils vorzugsweise nach Art eines Lineals als Schneidkante für ein Schneidwerkzeug zum Durchschneiden der Tapete.In einer bevorzugten Ausführungsform weist die erfindungsgemäße Abdeckung in ihren Ecken jeweils hervorstehende, spitzenförmige Ansätze auf, die insbesondere als Orientierungshilfe zum Umschneiden des Deckelteils dienen. Ferner ist es vorgesehen, den Rand des Deckelteils insbesondere in Form von vorstehenden Randstegen auszubilden, wobei diese entsprechend scharfkantig ausgebildet sein können, so daß die Tapete durch Aufdrücken auf die Abdeckung ausgeschnitten werden kann. Bei dieser Ausführung wäre dann kein zusätzliches Schneidwerkzeug zum Freischneiden der Abdeckung erforderlich. Für die Befestigung der erfindungsgemäßen Abdeckung sind auf der anderen Seite des Deckelteils insbesondere stegartige Fortsätze vorgesehen, die kraft- und/oder formschlüssig mit dem Unterputzgerät zusammenwirken. Die erfindungsgemäße Abdeckung findet eine bevorzugte Anwendung bei besonders empfindlichen Elektroniksockeln von Bussystemen (z.B. Europäischer Installations-Bus "EIB"). Hierfür weist das Deckelteil auf seiner dem Unterputzgerät zugekehrten Seite in Anpassung an die Steckverbinderteile derartiger Elektroniksockel vorzugsweise mehrere Wandungsstege auf, die in Form eines gehäuseartigen Steckerteils, welches das empfindliche Steckverbinderteil umgreift und somit vorteilhafterweise ein zusätzliches Schutzgehäuse bildet, angeordnet sind.

Durch eine derartige Abdeckung können jegliche Unterputzgeräte vor dem Tapezieren verschlossen und somit wirksam gegen Verschmutzung geschützt werden und nach dem Tapezieren problemlos wieder aufgefunden und freigelegt werden.

Weitere vorteilhafte Ausgestaltungsmerkmale und Ausführungen der Erfindung sind in der folgenden Figurenbeschreibung und den Unteransprüchen enthalten. Es zeigen:
- Fig. 1: ein Einbauteil eines elektrischen Unterputzgerätes in Perspektiv-Ansicht,
- Fig. 2 und 3: das Einbauteil mit erfindungsgemäßer Abdeckung in einer möglichen Ausführungsform in Perspektiv-Ansicht und
- Fig. 4 und 5: die erfindungsgemäße Abdeckung gemäß Fig. 2 und 3 in verschiedenen Perspektiven.

In der nachfolgenden Figurenbeschreibung sind gleiche und gleichartig wirkende Teile stets mit den gleichen Bezugszeichen versehen.

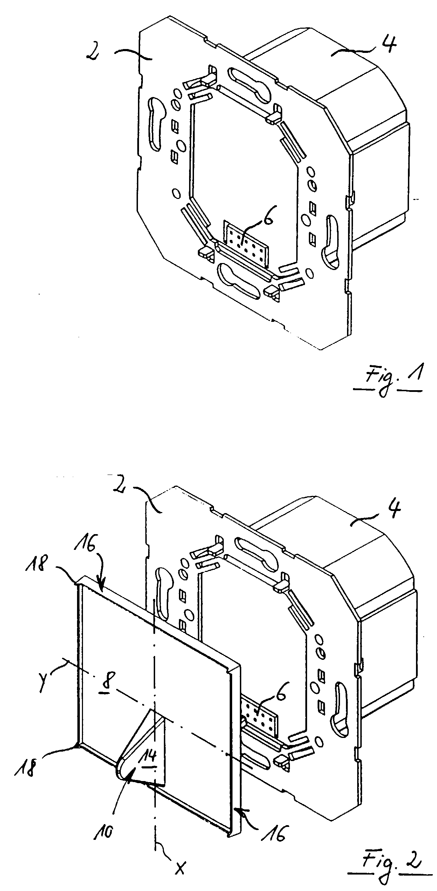

Die Fig. 1 zeigt eine mögliche Ausführungsform eines herkömmlichen Unterputzgerätes. Dieses Unterputzgerät besteht im wesentlichen aus einem Rahmenteil 2 und einem Sockelteil 4. Derartige Unterputzgeräte werden in vorgefertigte Löcher bzw. Sacklöcher in Wänden eingesetzt, bis sie mit ihrem Rahmenteil 2 auf der Einbauwand anliegen. Anschließend werden die Unterputzgeräte normalerweise durch verschiedenartige Klemmittel in der Wand befestigt. In der dargestellten Ausführungsform des Unterputzgerätes handelt es sich um einen Elektroniksockel für Bussysteme und dergleichen, wobei dieser in seinem Innenraum ein hochempfindliches Steckverbinderteil 6 aufweist. Dieses Steckverbinderteil 6 ist am unteren Rand der Öffnung des Sockelteils 4 angeordnet, so daß es mit einem in einem Betätigungselement oder einem Abdeckrahmen des Unterputzgerätes sitzenden Gegenstecker verbindbar ist (nicht dargestellt). Des weiteren sind in dem Rahmenteil 2 des Unterputzgerätes verschiedenartige Öffnungen vorhanden.

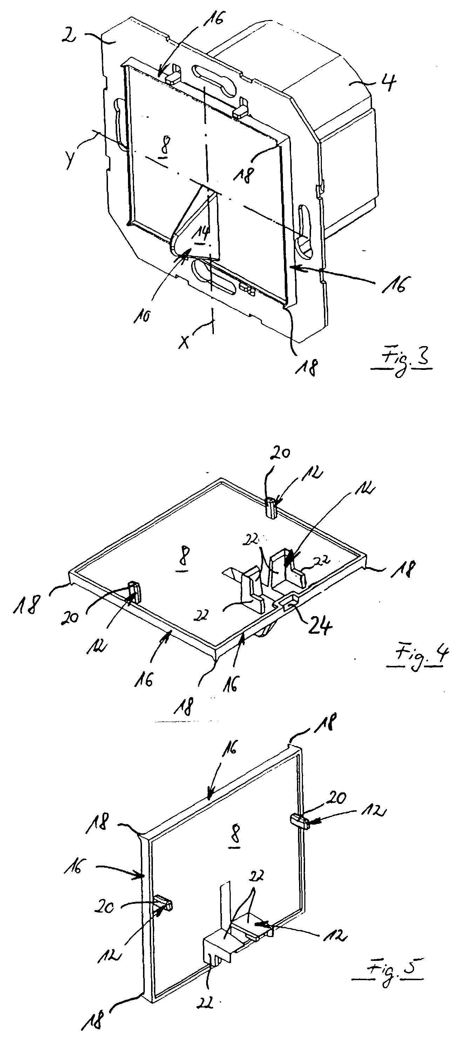

Die Fig. 2 und 3 zeigen das herkömmliche Unterputzgerät mit einer möglichen Ausführungsform der erfindungsgemäßen Abdeckung in Perspektiv-Ansicht. Die Abdeckung ist im wesentlichen in Form eines flachen Deckelteils 8 ausgebildet, welches eine Mindestgröße aufweist, die ausreicht, um die Öffnung des Sockelteils 4 gegen das Eindringen von Schmutz, Kleister und dergleichen wirksam zu verschließen. Dabei weist das Deckelteil 8 auf seiner Vorderseite mindestens einen vorstehenden Findungsansatz 10 und auf seiner Rückseite mindestens ein Befestigungsmittel 12 für die kraft- und/oder formschlüssige Verbindung mit dem Installationsgerät auf. In der dargestellten Ausführungsform der erfindungsgemäßen Abdeckung ist der Findungsansatz 10 vorzugsweise derart laschenförmig ausgebildet, daß er einen Griffansatz 14 für die einfache Handhabung der Abdeckung bildet. Bevorzugt ist der Findungsansatz 10 pyramidenförmig ausgebildet und weist eine im wesentlichen schmale, rechteckige Grundfläche auf, in deren Bereich er mit dem Deckelteil 8 verbunden ist. Vorzugsweise ist der Findungsansatz 10 an seinem freien dem Deckelteil 8 abgekehrten Ende scharfkantig ausgebildet, so daß eine überklebte Tapete, wenn diese z. B. mittels einer Tapezierbürste aufgedrückt wird, problemlos durchtrennt werden kann, wodurch der Findungsansatz 10 dann frei zugänglich ist. Um eine möglichst günstige Krafteinleitung auf die Abdeckung zu erwirken, ist der Findungsansatz 10 insbesondere im Bereich der mittig durch die Ebene des Deckelteils 8 verlaufenden Längs- oder Querachse X, Y angeordnet.

Der umfängliche Rand des in Anpassung an die Unterputzgeräte im wesentlichen rechteckigen, insbesondere quadratischen Deckelteils 8 weist bevorzugt einen vorstehenden Randsteg 16 auf, der einerseits als Anschlagkante für das Anlegen eines Schneidwerkzeuges zum Umschneiden des Deckelteils 8 dienen kann oder andererseits selbst eine Schneidkante bildet, wodurch mittels Druck auf eine überklebte Tapete diese im Randbereich des Deckelteils 8 eventuell sogar ohne ein separates Schneidwerkzeug ausgeschnitten werden könnte. Hierzu kann der Randsteg 16 im Querschnitt gesehen insbesondere eine dreieckige Form aufweisen, so daß eine vom Deckelteil 8 wegweisende Schneide gebildet ist. Weiterhin weist das Deckelteil 8 in mindestens zwei diagonal gegenüberliegenden Ecken spitzenförmige Ansätze 18 auf, die insbesondere der Bestimmung des Deckelumfanges zum Umschneiden desselben dienen, indem sie sich bereits durch die Tapete hindurchdrücken, wenn diese z. B. mittels einer Tapezierbürste angedrückt wird. Wie aus den Fig. 2 und 3 erkennbar ist, sind vorzugsweise in allen vier Ecken des Deckelteils 8 spitzenförmige Ansätze 18 ausgebildet.

In den Fig. 4 und 5 sind zwei mögliche Ausführungsformen der Befestigungsmittel 12 erkennbar. In einer ersten Ausführungsform der Befestigungsmittel 12 sind diese als insbesondere stiftförmige von der dem Unterputzgerät zugekehrten Deckelseite des Deckelteils 8 abstehende Fortsätze 20 ausgebildet. Erfindungsgemäß ist mindestens einer dieser Fortsätze 20, vorzugsweise zwei oder mehrere der Fortsätze 20 insbesondere im Randbereich des Deckelteils 8 angeordnet. In Anpassung an das Rahmenteil 2 sind in der dargestellten Ausführungsform zwei gegenüberliegende Fortsätze 20 etwa mittig im Randbereich des Deckelteils 8 angeordnet, wobei ein anderseitig auf dem Deckelteil 8 angeordneter Findungsansatz 10 vorzugsweise im Bereich zwischen den beiden Fortsätzen 20 zu positionieren wäre.

Alternativ oder zusätzlich ist eine zweite Ausführungsform des Befestigungsmittels 12 in Form von Wandungsstegen 22 vorgesehen. Diese Ausführungsform findet insbesondere ihre Anwendung bei Elektroniksockeln von Installationsbussystemen und dergleichen. Dabei sind die Wandungstege 22 vorzugsweise derart zueinander angeordnet, daß sie das empfindliche Steckverbinderteil 6 in Form eines zusätzlichen Schutzgehäuses insbesondere kraft- und/oder formschlüssig umgreifen. Wie in den Fig. 1 und 2 gezeigt greifen die Wandungsstege 22 beispielsweise in einen um das Steckverbinderteil 6 umlaufenden Schlitz des Sockelteils 4 von drei Seiten her ein. Somit können die derartig angeordneten Wandungsstege 22 einerseits als Schutzgehäuse und andererseits als Befestigungsmittel für die kraft- und/oder formschlüssige Verbindung mit dem Unterputzgerät dienen. In der dargestellten Ausführungsform (Fig. 4 und 5) sind insgesamt vier einzelne Wandungsstege 22 gezeigt, wobei jeweils zwei Wandungsstege 22 derart rechtwinklig zueinander angeordnet sind, daß sie das im Sockelteil 4 befindliche Steckverbinderteil 6 jeweils im Bereich der nach oben in die Öffnung des Sockelteils 4 weisenden Ecken umgreifen. Wie insbesondere in den Fig. 4 und 5 zu erkennen, sind die im montierten Zustand der Abdeckung oberhalb des Steckverbinderteils 6 horizontal verlaufenden Wandungsstege 22 durch eine etwa mittig verlaufende hohlförmige Ausnehmung des Findungsansatzes 10 unterbrochen. Dies ist insbesondere aus fertigungstechnischen Gründen der Fall, da die erfindungsgemäße Abdeckung vorzugsweise als einteiliges Kunststofformteil hergestellt wird. Es wäre jedoch ebenfalls denkbar, das Deckelteil 8 mit nur einem Wandungssteg 22 zu versehen, der im montierten Zustand der Abdeckung das Steckverbinderteil 6 von oben abdeckt. Weiterhin ist eine Ausführung vorstellbar, in der mindestens drei, vorzugsweise vier Wandungsstege 22 vorgesehen sind, die das Steckverbinderteil 6 zumindest von oben sowie beidseitig von rechts und von links oder aber rahmenartig, allseitig abdecken. So kann ein wirkungsvoller zusätzlicher Schutz für empfindliche Steckverbinderteile 6 gewährleistet werden. In der bevorzugten dargestellten Ausführungsform der erfindungsgemäßen Abdeckung ist der Findungsansatz 10 vorzugsweise im gleichen Flächenbereich wie die Wandungsstege 22 gegenüberliegend auf dem Deckelteil 8 angeordnet. Durch diese Anordnung wird bei der Montage bzw. Demontage der Abdeckung eine optimale Krafteinleitung auf die Befestigungsmittel 12 gewährleistet.

Eine weitere, nicht dargestellte Ausführungsform der Befestigungsmittel 12 könnte ebenfalls als Öffnung im Deckelteil 8 ausgeführt sein, die dann kraft- und/oder formschlüssig mit vorstehenden Ansätzen des Unterputzgerätes bzw. des Rahmenteils 2 des Unterputzgerätes zusammenwirkt.

In Fig. 4 ist noch zu erkennen, daß das Deckelteil 8 im Randbereich, insbesondere in der Nähe der Befestigungsmittel 12, und auf seiner dem jeweiligen abzudeckenden Gerät zugekehrten Rückseite in randoffene Vertiefung 24 aufweisen kann, die zur Aufnbahme einer Schraubendreherklinge dient, mit der dann durch Hebelwirkung das eventuell festsitzende Deckelteil 8 gelöst werden kann.

Die Erfindung ist nicht auf das dargestellte und beschriebene Ausführungsbeispiel beschränkt, sondern umfaßt auch alle im Sinne der Erfindung gleichwirkenden Ausführungsformen. So ist es beispielsweise denkbar, den bzw. jeden Findungsansatz 10 und das bzw. jedes Befestigungsmittel 12 in verschiedensten Ausführungsformen auszubilden. Weiterhin wäre es beispielsweise ebenfalls denkbar, daß die Randstege, wie bei der abgebildeten erfindungsgemäßen Abdeckung dargestellt, beidseitig vom Deckelteil 8 vorstehen und diese auf der dem Unterputzgerät zugekehrten Seite beispielsweise mit einer zusätzlichen umlaufenden Dichtung versehen werden (nicht dargestellt).

## Patentansprüche

1. Abdeckung für elektrische Installationsgeräte, insbesondere Unterputzgeräte, bestehend aus einem flachen Deckelteil (8), wobei das Deckelteil (8) eine Mindestgröße aufweist, die ausreicht, um eine Öffnung des Installationsgerätes schmutzdicht zu verschließen, und auf seiner Vorderseite mindestens einen von der Oberfläche vorstehenden Griffansatz (14) und auf seiner Rückseite mindestens ein Befestigungsmittel (12) zur kraft- und/oder formschlüssigen Verbindung mit dem Installationsgerät aufweist,
**dadurch gekennzeichnet**, daß der Griffansatz (14) als Findungsansatz (10) zur Wiederauffindung eines übertapezierten elektrischen Installationsgerätes an seinem freien, dem Deckelteil (8) abgekehrten Ende eine Schneidkante aufweist, wobei das Deckelteil (8) derart im Montagezustand auf dem Unterputzgerät aufliegt und ausgebildet ist, daß seine Ränder Anlagekanten für ein Schneidwerkzeug zum Durchschneiden der Tapete bilden.

2. Abdeckung nach Anspruch 1,
**dadurch gekennzeichnet**, daß der Findungsansatz (10) laschenförmig ausgebildet ist.

3. Abdeckung nach Anspruch 1 oder 2,
**dadurch gekennzeichnet**, daß der Findungsansatz (10) pyramidenförmig ausgebildet ist und eine schmale, rechteckige Grundfläche aufweist.

4. Abdeckung nach einem der Ansprüche 1 bis 3,
**dadurch gekennzeichnet**, daß der Findungsansatz (10) im Bereich der mittigen Längs- oder Querachse (X, Y) des Deckelteils (8) angeordnet ist.

5. Abdeckung nach einem der Ansprüche 1 bis 4,
**dadurch gekennzeichnet**, daß das Befestigungsmittel (12) als vom Deckelteil (8) abstehender Fortsatz (20) ausgebildet ist.

6. Abdeckung nach Anspruch 5,
**dadurch gekennzeichnet**, daß der Fortsatz (20) als Stift ausgeführt ist, der mit einer Öffnung des Unterputzgerätes kraft- und/oder formschlüssig zusammenwirkt.

7. Abdeckung nach einem der Ansprüche 1 bis 6,
**dadurch gekennzeichnet**, daß das Befestigungsmittel (12) als Öffnung im Deckelteil (8) zur kraft- und/oder formschlüssigen Aufnahme eines vom Unterputzgerät vorstehenden Ansatzes ausgeführt ist.

8. Abdeckung nach Anspruch 1 bis 7,
**dadurch gekennzeichnet**, daß das Deckelteil (8) als Befestigungsmittel (12) Wandungsstege (22) aufweist, die in Anpassung an ein im Unterputzgerät angeordnetes Steckverbinderteil (6) dieses im aufgesetzten Zustand der Abdeckung umgreifen.

9. Abdeckung nach Anspruch 8,
**dadurch gekennzeichnet**, daß vier einzelne Wandungsstege (22) ausgebildet sind, wobei jeweils zwei Wandungssstege (22) derart rechtwinklig zueinander angeordnet sind, daß sie das Steckverbinderteil (6) jeweils zumindest im Bereich der nach oben in die Öffnung des Sockelteils (4) weisenden Ecken umgreifen.

10. Abdeckung nach einem der Ansprüche 1 bis 9,
**dadurch gekennzeichnet**, daß das Deckelteil (8) im wesentlichen rechteckig, insbesondere quadratisch ausgeführt ist und auf seiner Vorderseite in zumindest zwei diagonal gegenüberliegenden Ecken einen spitzenförmigen Ansatz (18) aufweist.

11. Abdeckung nach einem der Ansprüche 1 bis 10,
**dadurch gekennzeichnet**, daß der Umfangsrand des Deckelteils (8) einen Randsteg (16) aufweist.

## Claims

1. Cover for electrical accessories, in particular flush-mounting accessories, comprising a flat cover part (8), the cover part (8) having a minimum size which suffices to seal an opening in the accessory in a dirtproof fashion, and having on its front side at least one gripping attachment (14) projecting from the surface and, on its rear side, at least one fastening means (12) for connecting to the accessory in a force-closed and/or self-closed fashion, characterized in that at its free end averted from the cover part (8) the gripping attachment (14) has a cutting edge as a finding attachment (10) for re-finding an over-papered electrical accessory, the cover part (8) resting in the mounting state on the flush-mounting accessory and being constructed in such a way that its rims form bearing edges for a cutting tool for severing the wallpaper.

2. Cover according to Claim 1, characterized in that the finding attachment (10) is constructed in the shape of a lug.

3. Cover according to Claim 1 or 2, characterized in that the finding attachment (10) is constructed in the shape of a pyramid and has a narrow, rectangular base surface.

4. Cover according to one of Claims 1 to 3, characterized in that the finding attachment (10) is arranged in the region of the central longitudinal or transverse axis (X, Y) of the cover part (8).

5. Cover according to one of Claims 1 to 4, characterized in that the fastening means (12) is constructed as an extension (20) projecting from the cover part (8).

6. Cover according to Claim 5, characterized in that the extension (20) is designed as a pin which co-operates with an opening in the flush-mounting accessory in a force-closed and/or self-closed fashion.

7. Cover according to one of Claims 1 to 6, characterized in that the fastening means (12) is designed as an opening in the cover part (8) for holding an attachment projecting from the flush-mounting accessory in a force-closed and/or self-closed fashion.

8. Cover according to Claims 1 to 7, characterized in that as fastening means (12) the cover part (8) has wall webs (22) which are adapted to a plug-in connector part (6) which is arranged in the flush-mounting accessory, and which embrace said plug-in connector part in the mounted stage of the cover.

9. Cover according to Claim 8, characterized in that four individual wall webs (22) are constructed, two wall webs (22) being respectively arranged at right angles to one another in such a way that they embrace the plug-in connector part (6), at least in each case in the region of the corners pointing upwards into the opening in the base part (4).

10. Cover according to one of Claims 1 to 9, characterized in that the cover part (8) is of an essentially rectangular, in particular square design, and has a pointed attachment (18) on its front side in at least two diagonally opposing corners.

11. Cover according to one of Claims 1 to 10, characterized in that the peripheral rim of the cover part (8) has a rim web (16).

## Revendications

1. Cache pour dispositifs d'installation électrique, notamment pour dispositifs encastrés, composés d'une partie couvercle plate (8), la partie couvercle (8) présentant une dimension minimum qui suffit pour obturer une ouverture du dispositif d'installation de façon étanche aux corps étrangers et présentant, sur sa face avant, au moins un appendice de prise (14) qui fait saillie sur la surface, et, sur sa face arrière, au moins un moyen de fixation (12) pour l'assembler au dispositif d'installation par la force et/ou par la forme, caractérisé en ce que, pour servir d'appendice de localisation (10) pour retrouver un dispositif d'installation électrique qui a été recouvert par du papier peint, l'appendice de prise (14) présente une arête tranchante à son extrémité libre qui est plus éloignée de la partie couvercle (8), la partie couvercle (8) étant appuyée sur le dispositif encastré dans l'état de montage, et aussi configurée, de manière que ses bords forment des arêtes d'appui pour un outil de coupe utilisé pour découper le papier peint.

2. Cache selon la revendication 1,
caractérisé en ce que l'appendice de localisation (10) présente la forme d'une languette.

3. Cache selon la revendication 1 ou 2,
caractérisé en ce que l'appendice de localisation (10) est de forme pyramidale et présente une surface de base étroite, rectangulaire.

4. Cache selon l'une des revendications 1 à 3, caractérisé en ce que l'appendice de localisation (10) est disposé dans la région de l'axe médian longitudinal ou transversal (X, Y) de la partie couvercle (8).

5. Cache selon l'une des revendications 1 à 4, caractérisé en ce que le moyen de fixation (12) est constitué par un prolongement (20) qui fait saillie sur la partie couvercle (8).

6. Cache selon la revendication 5,
caractérisé en ce que le prolongement (20) est réalisé sous la forme d'une cheville qui coopère avec une ouverture du dispositif encastré par la force et/ou par la forme.

7. Cache selon l'une des revendications 1 à 6, caractérisé en ce que le moyen de fixation (12) est réalisé sous la forme d'une ouverture de la partie couvercle (8) destinée à recevoir, avec liaison par la force et/ou par la forme, un appendice qui fait saillie sur le dispositif encastré.

8. Cache selon la revendication 1 à 7,
caractérisé en ce que la partie couvercle (8) présente, comme moyen de fixation (12), des nervures de paroi (22) qui, en s'adaptant à une partie connecteur à broches (6) disposée dans le dispositif encastré, encadrent cette partie dans l'état monté du cache.

9. Cache selon la revendication 8,
caractérisé en ce que quatre nervures de paroi (22) individuelles sont formées, deux nervures de paroi (22) étant disposées à angle droit l'une par rapport à l'autre de manière à encadrer la partie de connecteur à broches (6) au moins dans la région des angles pointant vers le haut et s'engageant dans l'ouverture de la partie socle (4).

10. Cache selon l'une des revendications 1 à 9, caractérisé en ce que la partie couvercle (8) est de forme sensiblement rectangulaire, en particulier carrée, et présente un appendice pointu (18) sur sa face avant, dans au moins deux angles opposés en diagonale.

11. Cache selon l'une des revendications 1 à 10, caractérisé en ce que le bord périphérique de la partie couvercle (8) présente une nervure marginale (16).
